# EUROPÄISCHE PATENTANMELDUNG

(11) **EP 4 614 388 A1**
(43) Veröffentlichungstag der Anmeldung: **10.09.2025**
(21) Anmeldenummer: 25161770.0
(22) Anmeldetag: 05.03.2025
(51) Int. Cl.: G06K 13/08, H01L 23/60, H10D 89/60

(54) **EINRICHTUNG ZUR HANDHABUNG VON DATENTRÄGERN MIT CHIPMODUL**

(30) Priorität: 06.03.2024 DE 102024106502
(71) Anmelder: Giesecke+Devrient ePayments GmbH, 81677 München (DE)
(72) Erfinder: Himml, Stefan, 81677 München (DE); Günther, Michael, 81677 München (DE); Baldischweiler, Michael, 81677 München, (DE); Bumes, Wilhelm, 81677 München, (DE)
(74) Vertreter: LKGLOBAL Lorenz & Kopf Patentanwalt Attorney at Law PartG mbB

(57) **Zusammenfassung**

Die Erfindung betrifft eine Handhabungsvorrichtung (3) zur Handhabung von ein Datenträgermodul (21) aufweisenden portablen Datenträgern (20), insbesondere Chipkarten, sowie eine Herstellungsanlage (1) zur Herstellung, insbesondere Personalisierung, portabler Datenträger (2), umfassend eine entsprechende Handhabungsvorrichtung mit einer Transporteinrichtung (4), die eine Transportebene (5) vorgibt, entlang der die Datenträger (20) in einer Transportrichtung (T) zu transportieren und dabei durch wenigstens ein Handhabungsorgan (30, 40, 50) zu kontaktieren sind, wobei das wenigstens eine Handhabungsorgan (30, 40, 50) derart versetzt zur Transportrichtung (T) angeordnet, ausgestaltet und/oder mit einer Aussparung (33) gegenüber der Transportebene (5) versehen ist, dass eine gleichzeitige Kontaktierung verschiedener Kontaktflächen (22) des Datenträgermoduls vermieden wird.

## Beschreibung

### Gebiet der Erfindung

Vorliegende Erfindung betrifft die Vermeidung von elektrostatisch bedingten Schäden oder Vorschädigungen von in portablen Datenträgern aufgenommenen Datenträgermodulen. Insbesondere betrifft die Erfindung eine Handhabungsvorrichtung zur Handhabung von ein Datenträgermodul aufweisenden portablen Datenträgern, insbesondere Chipkarten, und eine Herstellungsanlage zur Herstellung, insbesondere Personalisierung, portabler Datenträger, wie Chipkarten.

### Hintergrund der Erfindung

Portable Datenträger sind aus dem Stand der Technik bekannt und können beispielweise zum bargeldlosen Bezahlen von Waren oder Dienstleistungen, zur personenbezogenen Identitätsfeststellung und/oder für einen Zugang zu internetbasierten Anwendungsprogrammen eingesetzt werden. Dementsprechend gibt es z.B. kartenförmige Datenträger in Form von Chipkarten im Allgemeinen, Zahlungskarten, wie beispielsweise Kreditkarten oder Debitkarten, sowie Personalausweis- oder Identitätskarten. Derartige Datenträger umfassen üblicherweise ein Datenträgermodul mit einer elektronischen Schaltung in einem elektronischen Bauteil, wie einen Chip, auf den Zugriffen werden kann, um Daten daraus auszulesen und darauf basierend einen legitimen Besitzer des Datenträgers eine bestimmte Handlung vorzunehmen und/oder autorisieren zu lassen.

Herstellung sowie Personalisierung von portablen Datenträgern, wie z.B. Chipkarten, einschließlich Bankkarten, Kreditkarten, Ausweisdokumenten, Gesundheitskarten und Mitgliedskarten, erfordert deren Durchlauf durch maschinelle Verarbeitungseinheiten. Diese Maschinen nutzen verschiedene Transportmittel wie Förderbänder, Rollen und Walzen. Während des Durchlaufs durch die Maschine ist es unvermeidlich, dass die Transportmittel (Förderbänder, Rollen und Walzen) den Kartenkörper an verschiedenen Stellen berühren, möglicherweise sogar den Bereich des metallenen Chipmoduls, welches einen empfindlichen Halbleiterbaustein beherbergt.

DE 10 2005 045567 A1 betrifft ein Verfahren zur Herstellung eines kartenförmigen Datenträgers, der einen Kartenkörper aus Kunststoff aufweist. Das Verfahren zeichnet sich dadurch aus, dass in die Oberfläche des Kartenkörpers eine Struktur eines Werkzeugs eingeformt wird und dadurch ein Beschriftungsbereich ausgebildet wird, der für die Beschriftung mittels einer Beschriftungsflüssigkeit vorgesehen ist und eine durch das Werkzeug vorgegebene Oberflächenstruktur aufweist. Bei einer Variante des Verfahrens wird eine Rolle verwendet, auf deren Mantelfläche eine Prägestruktur ausgebildet ist. Zur Erzeugung der Oberflächenstruktur im Beschriftungsbereich des Kartenkörpers wird die Rolle gegen den Kartenkörper gepresst und dabei auf der Oberfläche des Kartenkörpers abgerollt. Dadurch wird die Prägestruktur in die Oberfläche des Kartenkörpers eingeprägt.

DE 10 2008 005320 A1 schlägt verschiedene Verfahren vor, wie ein kartenförmiger Datenträger unmittelbar im ID-000-Format (Plug-In) hergestellt werden kann und wie das Herstellungsverfahren mit der Einbringung von Sicherheitsmerkmalen, Individualisierungsdaten und Personalisierungsdaten kombiniert werden kann. Dabei wird ein Kartenkörper mit ID-000-Abmessungen unmittelbar mit der Rückseite eines Filmträgers bzw. Modulbands verbunden, beispielsweise angegossen oder angespritzt. Der Filmträger ist vorzugsweise transparent oder semi-transparent. Durch den Filmträger kann der Kartenkörper mittels Laserstrahlung markiert und beschriftet werden.

DE 102021 109014 A1 beschreibt ferner eine Kalander-Transportrolle für eine Kalandriereinrichtung für die Herstellung von Elektroden für eine Batteriezelle, insbesondere für eine Lithium-Ionen-Batteriezelle, die der Förderung eines Elektrodenbands zu oder von einem Paar Kalandrierwalzen dient, wobei das Elektrodenband ein flächiges Leiterband sowie eine zumindest auf der der Transportrolle zugewandten Seite darauf abschnittsweise aufgebrachte Beschichtung aufweist, wobei die Transportrolle einen Kontaktbereich auf ihrer Mantelfläche hat, der von dem Elektrodenband berührbar ist, hat in ihrem Kontaktbereich wenigstens einen Einstellabschnitt und es ist eine Aufweiteinrichtung vorgesehen, die den Durchmesser der Transportrolle im Einstellabschnitt so verändert, dass ein Höhenunterschied zwischen einem beschichteten Abschnitt des Elektrodenbands und einem angrenzenden unbeschichteten Abschnitt des Elektrodenbands ausgeglichen ist. In einer alternativen Ausgestaltung weist die Transportrolle in ihrem Kontaktbereich wenigstens einen Einstellabschnitt mit mindestens einem vorgefertigten Einstellring auf, in dem sich der Durchmesser der Transportrolle so verändern lässt, dass ein Höhenunterschied zwischen einem beschichteten Abschnitt des Elektrodenbands und einem angrenzenden unbeschichteten Abschnitt des Elektrodenbands ausgeglichen ist.

Bei den aus dem Stand der Technik bekannten Verfahren zur Herstellung sowie Personalisierung portabler Datenträger ist von Nachteil, dass während des Transports der portablen Datenträger in jeweiligen Herstellungsanlagen durch Reibung elektrische Ladung auf den Datenträgern aufgebaut wird. Infolgedessen kann zu unkontrollierten elektrischen Entladungen der portablen Datenträger kommen, was insbesondere bei plötzlichen Entladungen zu Schäden an im Datenträgermodul enthaltenen Halbleiterelementen führen kann. Um dieses potenzielle Risiko zu minimieren, werden zwar regelmäßig Ionisatoren und elektrostatischen Entladungsbürsten (ESD-Bürsten) verwendet, jedoch können trotz dieser Maßnahmen spontane Entladungen auftreten, beispielsweise wenn Transportrollen direkt über das Chipmodul laufen.

Daraus resultierende Entladungsschäden an portablen Datenträgern können nicht ohne Weiteres festgestellt werden. Häufig ist es nämlich der Fall, dass die Datenträgermodule nur vorgeschädigt sind, aber zumindest zunächst noch grundsätzlich funktionieren. Sie sind aber äußerst sensibel für weitere Entladungen und tendieren dazu, während der Lebenszeit im Feld früher auszufallen.

### Beschreibung

Es ist daher eine Aufgabe der vorliegenden Erfindung, Verfahren zur Herstellung und/oder Personalisierung von portablen Datenträgern bereitzustellen, bei denen Entladungsschäden vermieden werden. Insbesondere ist eine Aufgabe der vorliegenden Erfindung, eine sichere Handhabung der portablen Datenträger unter Vermeidung von Entladungsschäden zu ermöglichen.

Diese Aufgabe wird durch den Gegenstand der unabhängigen Ansprüche gelöst. Beispielhafte Ausführungsformen ergeben sich aus den abhängigen Ansprüchen und der nachfolgenden Beschreibung.

Hierin in Bezug auf Vorrichtungen und Anlagen beschriebenen Merkmale sowie entsprechende Elemente können als Verfahren und deren Schritte implementiert werden oder umgekehrt. Im Zusammenhang mit Vorrichtungen und Anlagen stehende Abschnitte der Beschreibung gelten also in analoger Weise auch für Herstellungs- bzw. Personalisierungsverfahren für portable Datenträger. Insbesondere können beliebige Funktionen der Vorrichtungen und Anlagen als Verfahrensschritte implementiert werden und Verfahrensschritte und damit zusammenhängend erwähnte Komponenten als Funktionen der Vorrichtungen und Anlagen implementiert sein.

Eine Handhabungsvorrichtung zur Handhabung von ein Datenträgermodul aufweisenden portablen Datenträgern, insbesondere Chipkarten, wird bereitgestellt, mit einer Transporteinrichtung, die eine Transportebene vorgibt, entlang der die Datenträger in einer Transportrichtung zu transportieren und dabei durch wenigstens ein Handhabungsorgan zu kontaktieren sind, wobei das wenigstens eine Handhabungsorgan derart versetzt zur Transportrichtung angeordnet, ausgestaltet und/oder mit einer Aussparung gegenüber der Transportebene versehen ist, dass eine gleichzeitige Kontaktierung verschiedener Kontaktflächen des Datenträgermoduls vermieden wird.

Eine Herstellungsanlage zur Herstellung, insbesondere Personalisierung, portabler Datenträger, wie Chipkarten, wird bereitgestellt, die eine entsprechende Handhabungsvorrichtung umfasst.

Somit können die portablen Datenträger die Herstellungsanlage durchlaufen, ohne dass die Handhabungsorgane, beispielsweise Transportmittel, wie Rollen, Walzen, Bürsten, etc., das Datenträgermodul mit dem empfindlichen Halbleiterbaustein ungünstig berühren. Beispielsweise kann das Handhabungsorgan dazu schräg zur Transportrichtung angeordnet sein. Standardmäßig verwendete Transportrollen und -walzen können derart modifiziert werden, dass ihre Transportfunktion erhalten bleibt und gleichzeitig jeglicher Kontakt zum Datenträgermodul vermieden wird. Dies kann durch die zerspanende Bearbeitung von Teilen der Transportrollen erreicht werden, wodurch alternative Rollendesigns entstehen.

Entsprechend modifizierte Handhabungsorgane ermöglichen weiterhin einen effizienten Transport der Chipkarte durch die Herstellungsanlage, ohne währenddessen gewisse Kontaktflächen des Datenträgermoduls direkt zu kontaktieren. Dadurch werden im Datenträgermodul enthaltende Halbleiterelemente vor Entladungsschäden geschützt. Gleichzeitig lässt sich die mechanische Belastung des Datenträgermoduls minimiert. Dies ist besonders wichtig im Kontext immer filigranerer Herstellungsverfahren für Datenträgermodule, einschließlich dünnerer Bonddrähte und der Verwendung kosteneffizienterer Materialien anstelle herkömmlichen teuren Golds.

Durch die erfindungsgemäße Lösung können also Entladungsschäden an Halbleitern darüber hinaus mechanische Belastungen von Datenträgermodulen vermieden werden, womit sich die Gesamtlebensdauer und Funktionalität von vielen Datenträgern erheblich verbessert, was zu einer Reduzierung von Ausfallraten und Ersatzkosten führt. Die erfindungsgemäße Lösung kann auf verschiedene Maschinentypen und Hersteller angewendet werden. Da die Entladungsschäden reduziert werden, trägt die erfindungsgemäße Lösung zur Nachhaltigkeit bei, indem sie den Ausschuss von defekten Chipkarten verringert und somit Ressourcen einspart.

Gemäß einer Ausführungsform der Handhabungsvorrichtung ist vorgesehen, dass das Handhabungsorgan derart angeordnet und/oder ausgestaltet ist, dass eine gleichzeitige Kontaktierung eines Rücksetzkontaktes ("RST") und eines Zeitgeberkontaktes ("CLK") des Datenträgermoduls vermieden wird. Dadurch kann zumindest verhindert werden, dass mit dem Rücksetzkontakt und dem Zeitgeberkontakt verbundene Halbleiterelemente etwaigen elektrostatischen Entladungen ausgesetzt sind. Auf diesem Wege lassen sich statische Entladungsschäden gezielt vermeiden bzw. wenigstens minimieren.

Gemäß einer Ausführungsform der Handhabungsvorrichtung ist vorgesehen, dass die Aussparung in einem Randbereich des Handhabungsorgans angeordnet ist. Auf diesem Wege lässt sich die Aussparung einfach am Handhabungsorgan anbringen. Somit lassen sich bereits bestehende bzw. verwendete Handhabungsorgane gezielt derart modifizieren, dass sich Entladungsschäden vermeiden bzw. wenigstens minimieren lassen.

Gemäß einer Ausführungsform der Handhabungsvorrichtung ist vorgesehen, das Handhabungsorgan in Richtung zur Transportebene hin und/oder entgegen der Transportrichtung gestuft ausgestaltet ist. Die gestufte Ausgestaltung erlaubt eine gezielte versetzte Anordnung des Handhabungsorgans zu Transportrichtung. Somit lassen sich insbesondere ungewünschte Kontaktierung des Datenträgermoduls gezielt und effizient vermeiden.

Gemäß einer Ausführungsform der Handhabungsvorrichtung ist vorgesehen, dass das Handhabungsorgan wenigstens einen entgegen der Transportrichtung vorragenden Kontaktschenkel aufweist, der dazu ausgestaltet ist, wenigstens eine der Kontaktflächen eines in sich in Transportrichtung bewegenden Datenträgermoduls zu kontaktieren, bevor übrige Abschnitte des Handhabungsorgans das Datenträgermodul kontaktieren. Die Lage des Handhabungsorgan kann so gewählt werden, dass es ein vertikal gespiegelte L-form darstellt, sprich zwei über ein Joch verbundene Schenkel besitzt, die vom Joch entgegen der Transportrichtung weg ragen. Der Bereich des unteren Schenkels berührt in diesem Fall zuerst die Bereiche VCC und GND des Datenträgermoduls. Ist die Verbindung zwischen dem Handhabungsorgan und GND hergestellt, berührt der lange Schenkel der ESD-Bürste die Bereiche "RST" und "CLK".

Alternativ oder zusätzlich kann das Handhabungsorgan senkrecht zur Karte stehen, aber zur Chipkartenseite einen z.B. mindestens 3mm breite und 5mm langen Schenkel aufweisen. Dieser Schenkel berührt in diesem Fall ebenfalls erst die Bereiche "VCC" und "GND". Erst danach berührt die das Handhabungsorgan die anderen Modulbereiche. Soweit das Datenträgermodul notwendigerweise kontaktiert werden muss, kann der Kontakt also derart hergestellt werden, dass etwaige elektrostatische Entladungen schadensfrei ablaufen können. Somit lassen sich Entladungsschäden weiter vermeiden bzw. wenigstens minimieren.

Gemäß einer Ausführungsform der Handhabungsvorrichtung ist vorgesehen, dass das Handhabungsorgan eine Transportrolle umfasst, deren Außenumfangsfläche umlaufend mit der Aussparung versehen ist. Die Transportrolle kann also mit ihren neben der Aussparung verbleibenden Bereichen den portablen Datenträger gezielt kontaktieren. Somit lassen sich Entladungsschäden weiter vermeiden bzw. wenigstens minimieren.

Gemäß einer Ausführungsform der Handhabungsvorrichtung ist vorgesehen, dass ein Teil der Transportrolle im Bereich der Aussparung entfernt ist. Beispielsweise kann der Teil der Transportrolle zum Entfernen zerspanend abgedreht werden. Auf diesem Wege lässt sich die Aussparung einfach am Handhabungsorgan anbringen. Somit lassen sich bereits bestehende bzw. verwendete Handhabungsorgane gezielt derart modifizieren, dass sich Entladungsschäden vermeiden bzw. wenigstens minimieren lassen.

Gemäß einer Ausführungsform der Handhabungsvorrichtung ist vorgesehen, dass das Handhabungsorgan eine ESD-Bürste umfasst. Die ESD-Bürste lässt sich mit den oben genannten Modifizierungen derart versehen, dass etwaige elektrostatische Ladungen gezielt vermieden bzw. zumindest sicher abgeleitet werden können. Auf diesem Wege lassen sich Entladungsschäden weiter vermeiden bzw. wenigstens minimieren.

Gemäß einer Ausführungsform der Handhabungsvorrichtung ist vorgesehen, dass das Handhabungsorgan mit einer Isolationsbeschichtung zur elektrischen Isolation gegenüber dem Datenträgermodul und/oder mit einer Ableitbeschichtung zum sicheren Ableiten etwaiger elektrostatischer Ladungen vom Datenträgermodul versehen ist. Das Handhabungsorgan lässt sich somit derart ausgestalten, dass etwaige elektrostatische Ladungen gezielt vermieden bzw. zumindest sicher abgeleitet werden können. Auf diesem Wege lassen sich Entladungsschäden weiter vermeiden bzw. wenigstens minimieren.

### Kurze Beschreibung der Figuren

- Fig. 1: zeigt eine schematische Perspektivansicht einer Herstellungsanlage für portable Datenträger mit einer Handhabungsvorrichtung.
- Fig. 2: zeigt eine schematische Draufsicht der in Fig. 1 gezeigten Herstellungsanlage.

### Detaillierte Beschreibung beispielhafter Ausführungsformen

Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

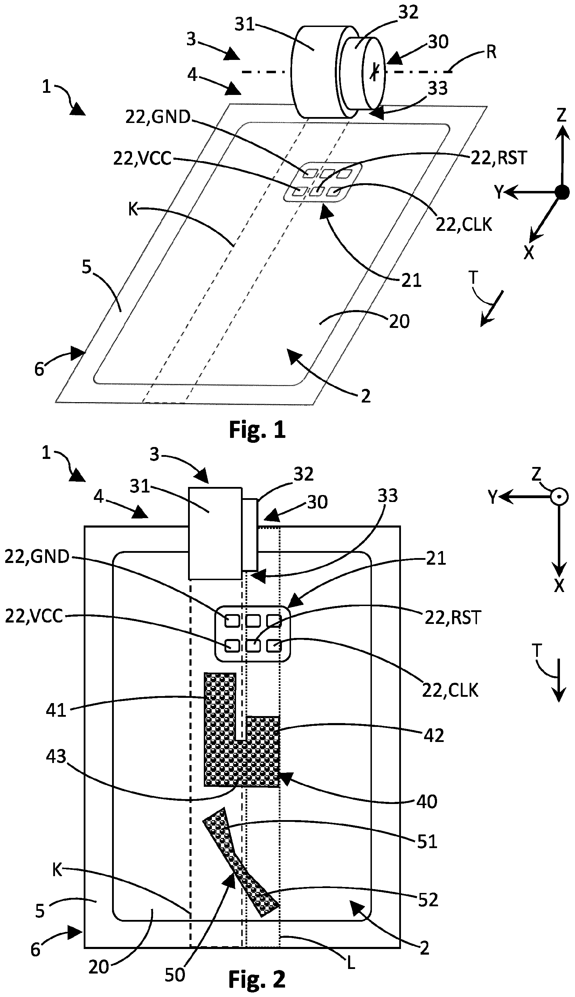

Fig. 1 zeigt eine schematische Perspektivansicht einer Herstellungsanlage 1 für portable Datenträger 2 mit einer Handhabungsvorrichtung 3 und einer Transporteinrichtung 4, die eine Transportebene 5 vorgibt und die Handhabungseinrichtung 3 umfassen und/oder zumindest mit ihr zusammenwirken kann. Die Transporteinrichtung 4 gibt eine Transportrichtung T vor und umfasst die Handhabungsvorrichtung 3 sowie einen Bearbeitungstisch 6, der Teil einer entsprechenden Bearbeitungsstrecke 6 mit Bearbeitungsmitteln (nicht gezeigt) sein kann. Die Längsrichtung X, eine Querrichtung Y und eine Höhenrichtung Z der Herstellungsanlage 1 bzw. des portablen Datenträgers 2 spannen gemeinsam ein kartesisches Koordinatensystem auf.

Der portable Datenträger 2 umfasst u.a. einen Trägerkörper 20 und ein Datenträgermodul 21, beispielsweise in Form eines Chipmoduls, das elektronische Halbleiterelemente umfassen kann (nicht gezeigt). Das Datenträgermodul 21 besitzt eine Vielzahl von Kontaktflächen 22, die einen Spannungskontakt VCC, einen Erdkontakt GND, einen Rücksetzkontaktes RST und einen Zeitgeberkontakt CLK umfassen können. Der portable Datenträger 2 kann mittels und/oder unter Einwirkung der Handhabungsvorrichtung 3 entlang der Transportrichtung T, die sich beispielsweise parallel zur der Längsrichtung X der Herstellungsanlage 1 bzw. des portablen Datenträgers 2 bzw. erstrecken kann, relativ zur bzw. entlang der Transportebene 5 bewegt werden.

Die Handhabungsvorrichtung 3 umfasst ein Handhabungsorgan 30. Das Handhabungsorgan 30 liegt hier in Form einer Transportrolle vor, die einen ersten zylindrischen Abschnitt 31 und einen zweiten zylindrischen Abschnitt 32 besitzt, die um eine Rotationsachse R des Handhabungsorgans 30 drehbar ausgestaltet sein können. Der erste zylindrischen Abschnitt 31 weist einen größeren Durchmesser als der zweite zylindrische Abschnitt 32 auf. Dadurch ist im Bereich des zweiten zylindrischen Abschnittes 32 eine Aussparung 33 am Handhabungsorgan 30 ausgeformt.

Im Betrieb der Transporteinrichtung 4 kann die erste zylindrischen Abschnitt 31 des Handhabungsorgans 30 den portablen Datenträger 2 in einem Kontaktbereich K kontaktieren. Kontaktbereich K kann so gewählt sein, dass die das Handhabungsorgan 30 keine der Kontaktflächen 22 gleichzeitig kontaktiert. Beispielsweise kann das Handhabungsorgan 30 lediglich den Spannungskontakt VCC und den Erdkontakt GND nacheinander kontaktieren, während der portable Datenträger 2 die Herstellungsanlage einen 1 in der Transportrichtung T durchläuft, da diese im Kontaktbereich K liegen. Mit anderen Worten gerät das Handhabungsorgan 30 im Bereich der Aussparung 33 nicht in Kontakt mit den portablen Datenträger 2 bzw. insbesondere seinen dadurch außerhalb des Kontaktbereiches K angeordneten Kontaktflächen 22, beispielsweise dem Zeitgeberkontakt CLK und/oder dem Rücksetzkontakt RST.

Fig. 2 zeigt eine schematische Draufsicht der in Fig. 1 gezeigten Herstellungsanlage 1, die neben dem Handhabungsorgan 30 ein weiteres Handhabungsorgan 40 sowie ein zusätzliches Handhabungsorgan 50 umfasst, die in Form von ESD-Bürsten vorliegen können. Das weitere Handhabungsorgan 40 und einen ersten Schenkel 41 und einen zweiten Schenkel 42 aufweisen, die über ein Joch 43 miteinander verbunden sein können. Der erste Schenkel 41 kann entgegen der Transportrichtung T vom Joch bzw. relativ zum zweiten Schenkel 42 derart hervorragen, dass er beim Durchlaufen des portablen Datenträgers 2 durch die Herstellungsanlage 1 zuerst ausgewählte Kontaktflächen bestreift, wie zum Beispiel zunächst den Spannungskontakt VCC und anschließend den Erdkontakt GND, die dann für einen gewissen Zeitraum gleichzeitig kontaktiert werden, bevor andere der Kontaktflächen 22 kontaktiert werden. Währenddessen und/oder anschließend kann der zweite Schenkel 42 verbleibende Kontaktflächen 22, wie beispielsweise den Rücksetzkontakt RST und/oder den Zeitgeberkontakt CLK kontaktieren, wenn der portable Datenträger 2 die Herstellungsanlage 1 in Transportrichtung T durchläuft.

Das zusätzliche Handhabungsorgan 50 kann derart schräg zur Transportrichtung T angeordnet sein, dass es einen vorwärtigen Kontaktabschnitt 51 und einen rückwärtigen Kontaktabschnitt 51 aufweist. Ähnlich wie es beim weiteren Handhabungsorgan 40 der erste Schenkel 41 und der zweite Schenkel 42 tun, kann der vollwertige Kontaktabschnitt 51 derart entgegen der Transportrichtung T relativ zum rückwärtigen Kontaktabschnitt 52 derart hervorragen, dass er beim Durchlaufen des portablen Datenträgers 2 durch die Herstellungsanlage 1 zuerst ausgewählte Kontaktflächen bestreift, wie zum Beispiel zunächst den Spannungskontakt VCC und anschließend den Erdkontakt GND, die dann für einen gewissen Zeitraum gleichzeitig kontaktiert werden, bevor andere der Kontaktflächen 22 kontaktiert werden. Währenddessen und/oder anschließend kann der rückwärtige Kontaktabschnitt 52 verbleibende Kontaktflächen 22, wie beispielsweise den Rücksetzkontakt RST und/oder den Zeitgeberkontakt CLK kontaktieren, wenn der portable Datenträger 2 die Herstellungsanlage einen in Transportrichtung T durchläuft.

Die erste Schenkel 41 des weiteren Handhabungsorgans 40 und/oder der vorwärtige Kontaktabschnitt 51 des zusätzlichen Handhabungsorgans 50 können bzw. kann im Kontaktbereich K angeordnet sein bzw. sich mit diesem überlappen und/oder in zumindest teilweise ausbilden. Die zweite Schenkel 42 des weiteren Handhabungsorgans 40 und/oder der rückwärtige Kontaktabschnitt 52 des zusätzlichen Handhabungsorgans 50 können bzw. kann in einem weiteren Kontaktbereich L angeordnet sein bzw. sich mit diesem überlappen und/oder ihn zumindest teilweise ausbilden. Der Kontaktbereich K kann zu einer sukzessiven Kontaktierung ausgewählter Kontaktflächen 22 und/oder der weitere Kontaktbereich L zu einer gleichzeitigen bzw. überlappenden Kontaktierung ausgewählter Kontaktflächen 22 ausgestaltet sein.

### Bezugszeichenliste

- 1: Herstellungsanlage
- 2: portabler Datenträger / Chipkarte
- 3: Handhabungsvorrichtung
- 4: Transporteinrichtung
- 5: Transportebene
- 6: Bearbeitungstisch / Bearbeitungsstrecke

- 20: Trägerkörper
- 21: Datenträgermodul
- 22: Kontaktfläche

- 30: Handhabungsorgan / Transportrolle
- 31: erster zylindrischer Abschnitt
- 32: zweiter zylindrische Abschnitt
- 33: Aussparung

- 40: weiteres Handhabungsorgan / ESD-Bürste
- 41: erster Schenkel
- 42: zweiter Schenkel
- 43: Joch

- 50: zusätzliches Handhabungsorgan / ESD-Bürste
- 51: vorwärtiger Kontaktabschnitt
- 52: rückwärtiger Kontaktabschnitt

- K: Kontaktbereich
- L: weiterer Kontaktbereich / Überlappungsbereich
- R: Rotationsachse
- T: Transportrichtung
- X: Längsrichtung
- Y: Querrichtung
- Z: Höhenrichtung

- CLK: Zeitgeberkontakt
- GND: Erdkontakt
- RST: Rücksetzkontakt
- VCC: Spannungskontakt

## Patentansprüche

1. Handhabungsvorrichtung (3) zur Handhabung von ein Datenträgermodul (21) aufweisenden portablen Datenträgern (20), insbesondere Chipkarten, mit einer Transporteinrichtung (4), die eine Transportebene (5) vorgibt, entlang der die Datenträger (20) in einer Transportrichtung (T) zu transportieren und dabei durch wenigstens ein Handhabungsorgan (30, 40, 50) zu kontaktieren sind, **dadurch gekennzeichnet, dass** das wenigstens eine Handhabungsorgan (30, 40, 50) derart versetzt zur Transportrichtung (T) angeordnet, ausgestaltet und/oder mit einer Aussparung (33) gegenüber der Transportebene (5) versehen ist, dass eine gleichzeitige Kontaktierung verschiedener Kontaktflächen (22) des Datenträgermoduls vermieden wird.

2. Handhabungsvorrichtung (3) nach Anspruch 1, **dadurch gekennzeichnet, dass** das Handhabungsorgan (30, 40, 50) derart angeordnet und/oder ausgestaltet ist, dass eine gleichzeitige Kontaktierung eines Rücksetzkontaktes (RST) und eines Zeitgeberkontaktes (CLK) des Datenträgermoduls (21) vermieden wird.

3. Handhabungsvorrichtung (3) nach Anspruch 1 oder 2, **dadurch gekennzeichnet, dass** das die Aussparung in einem Randbereich des Handhabungsorgans (30, 40, 50) angeordnet ist.

4. Handhabungsvorrichtung (3) nach Anspruch wenigstens einem der Ansprüche 1 bis 3, **dadurch gekennzeichnet, dass** das Handhabungsorgan (30, 40, 50) in Richtung zur Transportebene (5) hin und/oder entgegen der Transportrichtung (T) gestuft ausgestaltet ist.

5. Handhabungsvorrichtung (3) nach Anspruch wenigstens einem der Ansprüche 1 bis 4, **dadurch gekennzeichnet, dass** das Handhabungsorgan (30, 40, 50) wenigstens einen entgegen der Transportrichtung vorragenden Kontaktschenkel (41, 42) aufweist, der dazu ausgestaltet ist, wenigstens eine der Kontaktflächen (22) eines in sich in Transportrichtung (T) bewegenden Datenträgermoduls (21) zu kontaktieren, bevor übrige Abschnitte des Handhabungsorgans (30, 40, 50) das Datenträgermodul kontaktieren.

6. Handhabungsvorrichtung (3) nach wenigstens einem der Ansprüche 1 bis 5,
**dadurch gekennzeichnet, dass** das Handhabungsorgan (30, 40, 50) eine Transportrolle umfasst, deren Außenumfangsfläche umlaufend mit der Aussparung (33) versehen ist.

7. Handhabungsvorrichtung (3) nach Anspruch 6, **dadurch gekennzeichnet, dass** ein Teil der Transportrolle im Bereich der Aussparung (33) entfernt ist.

8. Handhabungsvorrichtung (3) wenigstens einem der Ansprüche 1 bis 7, **dadurch gekennzeichnet, dass** das Handhabungsorgan (30, 40, 50) eine ESD-Bürste umfasst.

9. Handhabungsvorrichtung (3) wenigstens einem der Ansprüche 1 bis 8, **dadurch gekennzeichnet, dass** das Handhabungsorgan (30, 40, 50) mit einer Isolationsbeschichtung zur elektrischen Isolation gegenüber dem Datenträgermodul (21) und/oder mit einer Ableitbeschichtung zum sicheren Ableiten etwaiger elektrostatischer Ladungen vom Datenträgermodul (21) versehen ist.

10. Herstellungsanlage (1) zur Herstellung, insbesondere Personalisierung, portabler Datenträger (2), wie Chipkarten, **gekennzeichnet durch** eine Handhabungsvorrichtung (3) nach wenigstens einem der Ansprüche 1 bis 9.
